(19) Europäisches Patentamt
European Patent Office
Office européen des brevets

(11) EP 4 614 386 A1

(12) **EUROPEAN PATENT APPLICATION**
published in accordance with Art. 153(4) EPC

(43) Date of publication:
**10.09.2025 Bulletin 2025/37**

(21) Application number: **22963902.6**

(22) Date of filing: **03.11.2022**

(51) International Patent Classification (IPC):
**G06K 7/00** $^{(2006.01)}$

(52) Cooperative Patent Classification (CPC):
**G06K 7/00**

(86) International application number:
**PCT/CN2022/129394**

(87) International publication number:
**WO 2024/092588 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Hanshow Technology Co., Ltd.**
**Jiaxing, Zhejiang 314031 (CN)**

(72) Inventors:
• **LIANG, Min**
  **Jiaxing, Zhejiang 314031 (CN)**
• **LYU, Jie**
  **Jiaxing, Zhejiang 314031 (CN)**
• **JIANG, Chunle**
  **Jiaxing, Zhejiang 314031 (CN)**
• **JI, Yaping**
  **Jiaxing, Zhejiang 314031 (CN)**
• **ZHANG, Guofeng**
  **Jiaxing, Zhejiang 314031 (CN)**

(74) Representative: **IP TRUST SERVICES**
**Europole - Le Grenat**
**3, avenue Doyen Louis Weil**
**38000 Grenoble (FR)**

(54) **DEVICE POSITIONING METHOD AND SYSTEM BY USING SIGNAL DIRECTION**

(57) A device positioning method and system by using signal direction, and the method includes: sending, by a device to be located, an angle-measurable signal to a base station, and the angle-measurable signal includes heartbeat data having an ID of the device to be located, and a sine wave of a preset duration or a modulated wave of a known digital sequence (201) preset duration; calculating, by the base station, an angle of arrival based on the angle-measurable signal, and sending the angle of arrival to a location server, and the base station includes an angle of arrival (AOA) calculation module and an antenna array required for an AOA measurement (202); and calculating, by the positioning server, a position of the device to be located based on the angle of arrival (203). The present disclosure can improve the positioning accuracy of an electronic shelf label, and reducing the complexity of the deployment of an electronic shelf label positioning system.

sending, by a device to be located, an angle-measurable signal to a base station, and the angle-measurable signal includes heartbeat data having an ID of the device to be located, and a sine wave of a preset duration or a modulated wave of a known digital sequence — 201

calculating, by the base station, an angle of arrival based on the angle-measurable signal, and sending the angle of arrival to a location server, and the base station includes an angle of arrival (AOA) calculation module and an antenna array required for an AOA measurement — 202

calculating, by the positioning server, a position of the device to be located based on the angle of arrival — 203

FIG. 2

## Description

TECHNICAL FIELD

The present disclosure relates to the technical field of positioning, and particularly to a device positioning method and system by using signal direction.

BACKGROUND

The electronic shelf labels (also known as electronic price tags) installed in offline stores can display prices, enabling store managers to implement unified price management. Both store staff managing merchandise and customers shopping in large stores require the ability to quickly locate products, which requires a technical solution to accurately position the products and people in the store and navigate the movement of people. As a wireless communication system, an electronic shelf label system maintains a one-to-one correspondence relationship between labels and products. Through wireless communication among the electronic shelf labels and signal processing, the physical locations of the electronic shelf labels can be obtained, thus positioning the products.

The existing technical solution mainly obtains neighbor relationships among the electronic shelf labels through mutual communication and measurement among the electronic shelf labels, thereby positioning the electronic shelf labels. However, this approach presents deployment challenges, limited adaptability in certain scenarios, and an inability to track human positions.

In addition, deploying Ibeacon within the scenario enable real-time human positioning. Ibeacon uses wireless signal fingerprints for positioning. Once the physical elements such as shelves in the deployed scenario change, the information of the fingerprints will change significantly, and the positioning results will be severe inaccurate.

SUMMARY

The embodiments of the present disclosure provide a device positioning method by using signal direction, including:

sending, by a device to be located, an angle-measurable signal to a base station, and the angle-measurable signal includes heartbeat data having an ID of the device to be located, and a sine wave of a preset duration or a modulated wave of a known digital sequence;
calculating, by the base station, an angle of arrival based on the angle-measurable signal, and sending the angle of arrival to a location server, and the base station includes an angle of arrival (AOA) calculation module and an antenna array required for an AOA measurement; and

calculating, by the location server, a position of the device to be located based on the angle of arrival.

The embodiments of the present disclosure provide a device positioning system by using signal direction, including a device to be located, a base station, and a location server;
the device to be located, the base station, and the location server are configured to implement the aforementioned device positioning method by using signal direction.

The embodiments of the present disclosure further provide a computer device, including a memory, a processor, and a computer program stored in the memory and executable on the processor, and when executing the computer program, the processor implements the aforementioned device positioning method by using signal direction.

The embodiments of the present disclosure further provide a computer-readable storage medium, storing a computer program, and when executed by a processor, the computer program implements the aforementioned device positioning method by using signal direction.

The embodiments of the present disclosure further provide a computer program product, including a computer program, and when executed by a processor, the computer program implements the aforementioned device positioning method by using signal direction.

As compared with a technical solution in the prior art that a neighbor relationship between electronic shelf labels being obtained through mutual communication and measurement therebetween is used to the electronic shelf label positioning, or the real-time human positioning is realized by introducing the Ibeacon, in the embodiments of the present disclosure, a device to be located sends an angle-measurable signal to a base station, and the angle-measurable signal includes heartbeat data, and a sine wave of a preset duration or a modulated wave of a preset duration encoded with a known digital sequence; the base station calculates an angle of arrival based on the angle-measurable signal, and sends the angle of arrival to the location server, and the base station includes an angle of arrival (AOA) calculation module and an antenna array required for an AOA measurement; and the location server calculates a position of the device to be located based on the angle of arrival, thereby improving the positioning accuracy of an electronic shelf label and reducing the complexity of the deployment of an electronic shelf label positioning system.

BRIEF DESCRIPTION OF DRAWINGS

In order to more clearly illustrate the technical solutions in the embodiments of the present disclosure or in the prior art, the drawings to be used in the description of the embodiments or the prior art will be briefly introduced below. Obviously, the drawings involved in the following description only illustrate some embodiments of the present disclosure, and other drawings can be obtained according to these drawings by those of ordinary skill in the art without paying any inventive effort. In the drawings:

FIG. 1 illustrates a block diagram of a structure of a device positioning system by using signal direction according to an embodiment of the present disclosure;

FIG. 2 illustrates a first flowchart of a device positioning method by using signal direction according to an embodiment of the present disclosure;

FIG. 3 illustrates a schematic diagram of a digital map of a store according to an embodiment of the present disclosure;

FIG. 4 illustrates a schematic diagram of a main circuit framework of a base station according to an embodiment of the present disclosure;

FIG. 5 illustrates a flowchart of a device positioning method by using signal direction according to a second embodiment of the present disclosure;

FIG. 6 illustrates a flowchart of a device positioning method by using signal direction according to a third embodiment of the present disclosure;

FIG. 7 illustrates a flowchart of a device positioning method by using signal direction according to a fourth embodiment of the present disclosure;

FIG. 8 illustrates a first schematic diagram of a principle of AOA positioning of electronic shelf labels by a base station using a 2.4 G signal according to an embodiment of the present disclosure;

FIG. 9 illustrates a schematic diagram of an antenna array required for an AOA measurement in a base station according to an embodiment of the present disclosure;

FIG. 10 illustrates a schematic diagram of an antenna array required for an AOA measurement in base station according to another embodiment of the present disclosure;

FIG. 11 illustrates a schematic diagram of a principle of AOA positioning of electronic shelf labels by a base station using a 2.4 G signal according to a second embodiment of the present disclosure;

FIG. 12 illustrates a schematic diagram of a format of an angle-measurable signal sent by a device to be located according to an embodiment of the present disclosure;

FIG. 13 illustrates a flowchart of a device positioning method by using signal direction according to a fifth embodiment of the present disclosure; and

FIG. 14 illustrates a schematic diagram of a format of a special ACK signal returned by a device to be located according to an embodiment of the present disclosure.

DESCRIPTION OF EMBODIMENTS

In order to make the objectives, technical solutions and advantages of the embodiments of the present disclosure clearer, the embodiments of the present disclosure are further described in detail below with reference to the drawings. Here, the exemplary embodiments of the present disclosure and the descriptions thereof are only for the purpose of illustrating the present disclosure, and are not used as limitations to the present disclosure.

In the technical solutions of the present disclosure, the acquisition, storage, use, processing, etc. of data all comply with the relevant provisions of national laws and regulations.

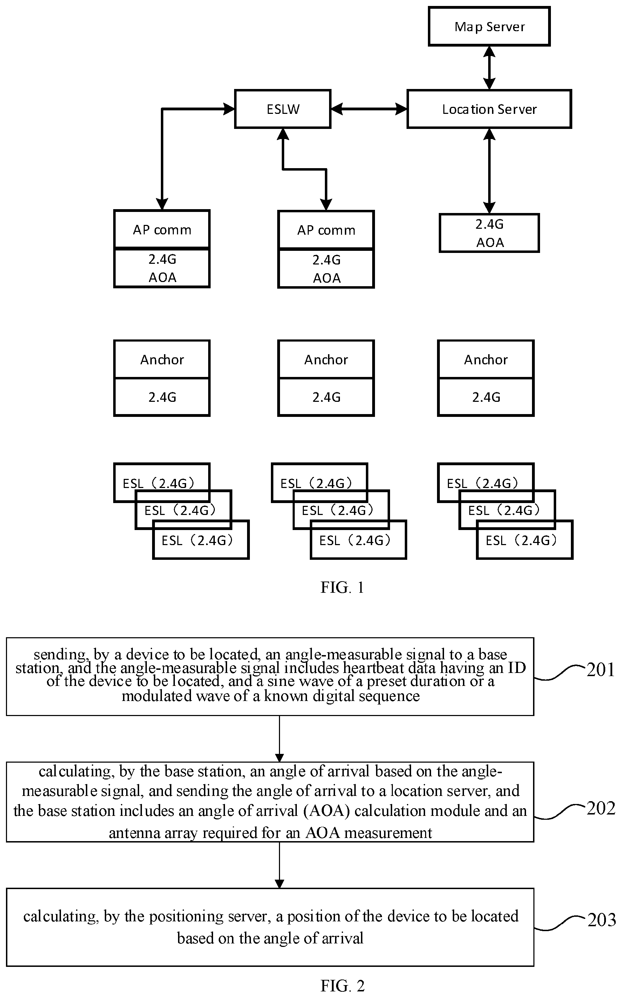

Based on the above problems existing in the prior art, the present disclosure proposes a device positioning system by using signal direction. As illustrated in FIG. 1, the system includes: a device to be located, a base station, and a location server, in which the device to be located may be an electronic shelf label (ESL) (using 2.4 G communication, as illustrated in FIG. 1), and may also be a shopping cart in a supermarket (not illustrated in FIG. 1), or a shopping person (not illustrated in FIG. 1, and the positioning of the person is determined through a mobile terminal used by the person), and the base station corresponds to an AP (Access Point) in FIG. 1.

The device to be located, the base station, and the location server are configured to implement the device positioning method by using signal direction. As illustrated in FIG. 2, the method includes:

step 201: sending, by a device to be located, an angle-measurable signal to a base station, and the angle-measurable signal includes heartbeat data having an ID of the device to be located, and a sine wave of a preset duration or a modulated wave of a known digital sequence;

step 202: calculating, by the base station, an angle of arrival based on the angle-measurable signal, and sending the angle of arrival to a location server (through an Electronic Shelf Label Network, ESLW), and the base station includes an angle of arrival (AOA) calculation module and an antenna array required for an AOA measurement; and

step 203: calculating, by the positioning server, a position of the device to be located based on the angle of arrival.

Specifically, the heartbeat data has the ID of the device to be located, which is convenient for later application. The AP includes a module in communication with the device to be located (hereinafter AP comm is represented by the electronic shelf label ESL) and an Arrival of Angle (AOA) module added with 2.4 G communication required for positioning, as illustrated in FIG. 1. Note that the AP for positioning alone only includes the AOA module, without a communication module. Some APs have both a communication function and a positioning function, and some APs only have the AOA module for positioning. Here is the explanation of this option.

The location server is responsible for positioning algorithms, including a positioning algorithm for the electronic shelf label and a positioning algorithm for people and shopping carts.

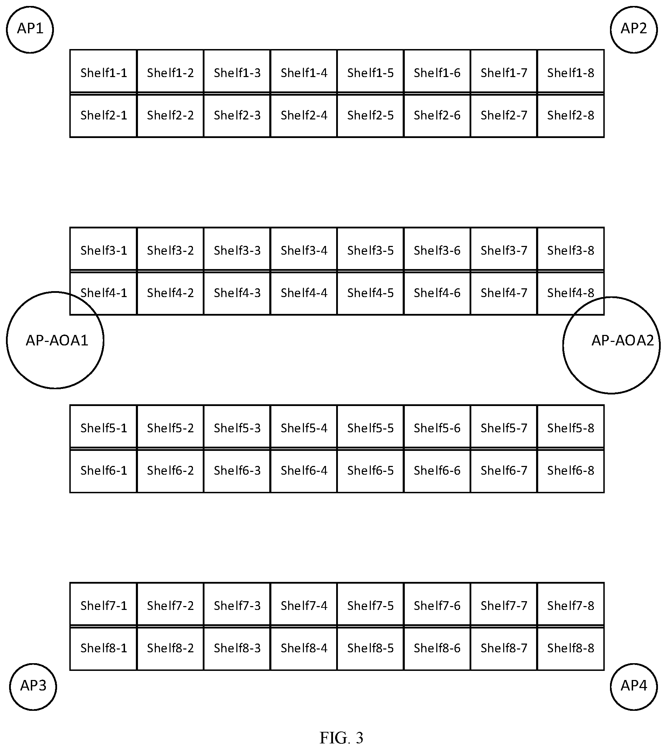

Since a coverage range of the module of the AP responsible for communication with the electronic shelf label is larger than a measurement range of an AOA reception signal, it is necessary to install a base station for an AOA measurement in some positions, as illustrated in FIG. 3.

It is recommended to arrange the APs in a store, so that there is one AP with both the communication function and the positioning function or one AP only with the positioning function at an interval no more than 10 meters. Regardless of the type of the AP, the AOA module must be provided. The positioning precision is about 1 meter. The AP is responsible for angle measurement of the signal from the electronic shelf label, and the location server calculates the positioning result. Alternatively, the AP may just obtain an original signal, and the location server calculates the angle and the positioning result. This solution can also provide the positioning capabilities for the shopping carts and people.

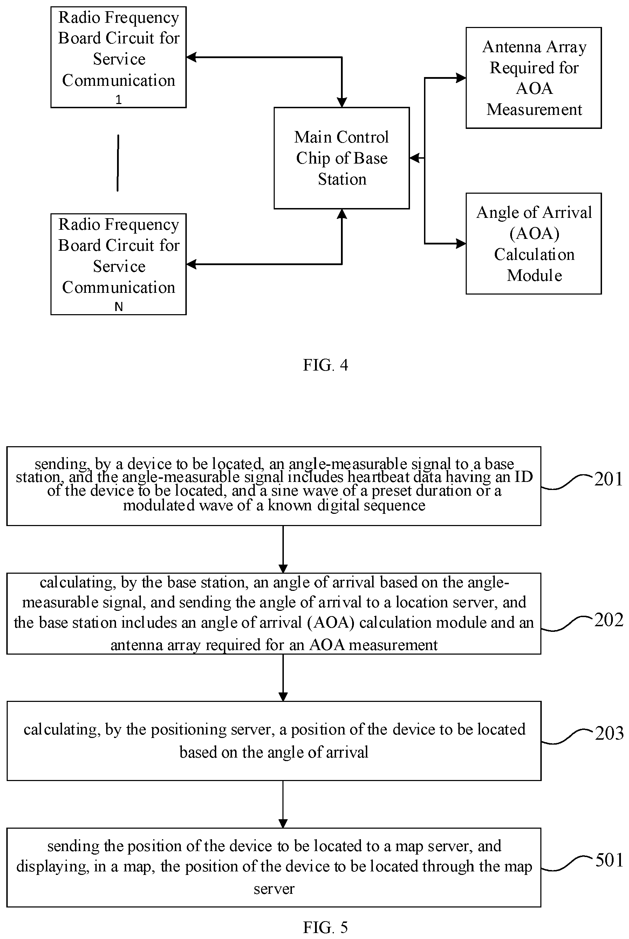

Referring to FIG. 4, which illustrates a schematic diagram of a main circuit framework of a base station. In an embodiment, the base station includes a radio frequency circuit required for service data communication with the electronic shelf label.

The method further includes:
the base station performs service communication with the device to be located through the radio frequency circuit, and receives the heartbeat data, and the sine wave or the modulated wave, of the device to be located within the coverage range.

That is, the base station includes an antenna array required for angle-based positioning and an antenna array required for angle-based positioning. The base station performs service communication with the device to be located through the radio frequency circuit, as illustrated in FIG. 4, and there may be a plurality of the radio frequency circuits.

In the embodiment of the present disclosure, as illustrated in FIG. 1, the system further includes a map server, which controls a whole positioning procedure, a map management and an application on a map, i.e., collects and maps results calculated by the location server onto the map, and provides more flexible application interfaces for an upper-layer application.

Specifically, as illustrated in FIG. 5, the method further includes:
step 501: sending the position of the device to be located to a map server, and displaying, in a map, the position of the device to be located through the map server.

In the embodiment of the present disclosure, as illustrated in FIG. 1, the system further includes an anchor (2.4 G communication may also be used), which is installed on the top of a shelf and emits an AOA signal. Since the anchor is placed in a good position, the AP can accurately locate the anchor. Next, the anchor may be further associated with the electronic shelf label by means of neighbor learning (a known positioning method), so as to obtain the position of the electronic shelf label.

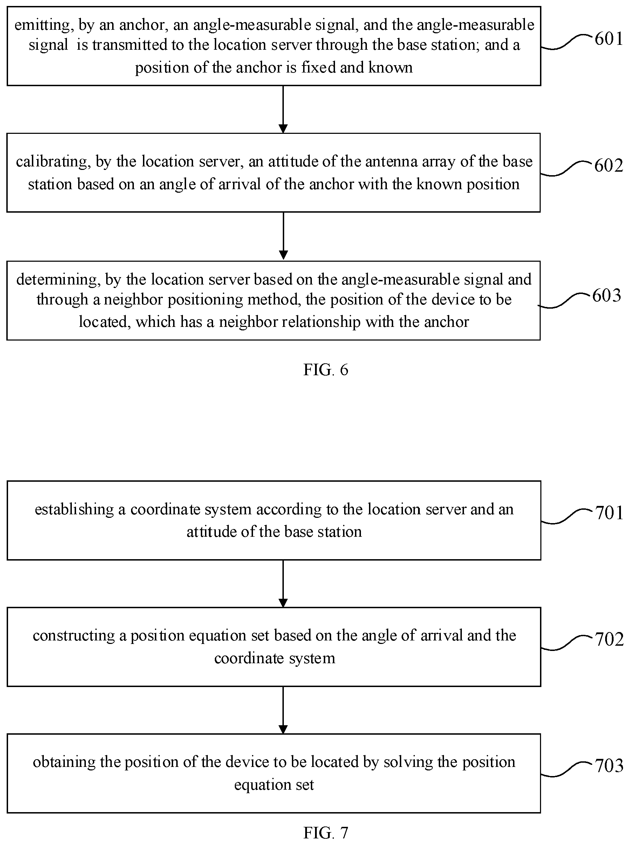

Specifically, as illustrated in FIG. 6, the method further includes:

> step 601: emitting, by an anchor, an angle-measurable signal, and the angle-measurable signal is transmitted to the location server through the base station; and a position of the anchor is fixed and known;
> step 602: calibrating, by the location server, an attitude of the antenna array of the base station based on an angle of arrival of the anchor with the known position;
> step 603: determining, by the location server based on the angle-measurable signal and through a neighbor positioning method, the position of the device to be located, which has a neighbor relationship with the anchor.

After the attitude of the antenna array of the base station is calibrated, the accuracy thereof can be higher, so that a coordinate system subsequently established according to the location server and the attitude of the base station can be more accurate.

In the embodiment of the present disclosure, as illustrated in FIG. 7, step 203 the calculating, by the location server, the position of the device to be located based on the angle of arrival includes:

> step 701: establishing a coordinate system according to the location server and an attitude of the base station;
> step 702: constructing a position equation set based on the angle of arrival and the coordinate system; and
> step 703: obtaining the position of the device to be located by solving the position equation set.

Specifically, the basic principle for the system to perform AOA positioning of the electronic shelf label using a 2.4 G communication signal is as follows:

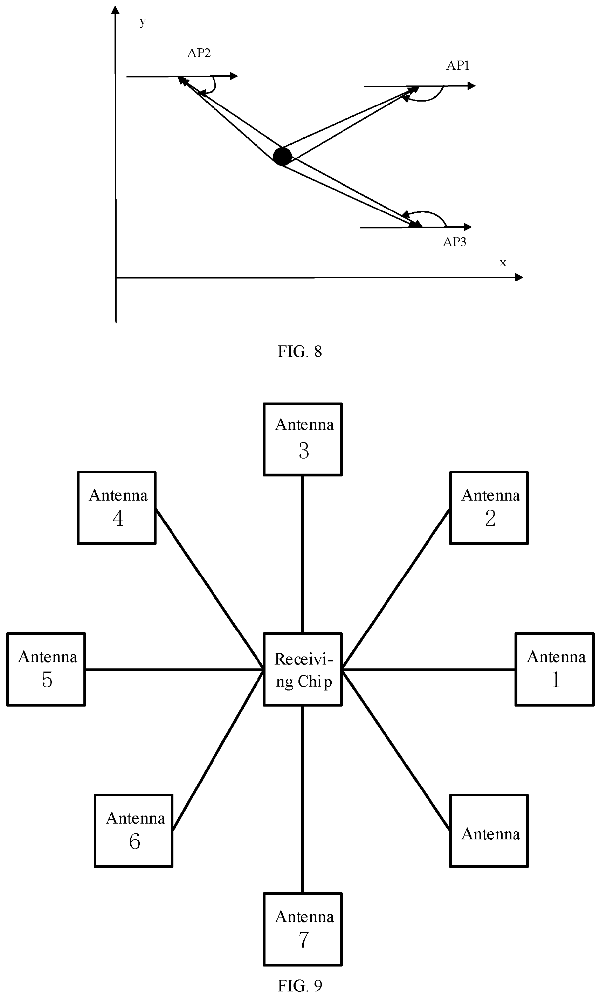

As illustrated in FIG. 8, a base station measures and obtains a signal strength and a signal direction angle of an electronic shelf label, and then the positions of some electronic shelf labels can be located by combining the signal strengths and the direction angles of the electronic shelf label received simultaneously by a plurality of base stations.

A base station may measure and determine a direction of an electronic shelf label, which is corresponding to a ray in space, and there is some error in this ray. A plurality of rays corresponding to a plurality of base stations may have their own errors, and intersect at a point in theory, but in fact may intersect in a small area, or intersect at a spatial point with the smallest error.

The equation of a line in space: $c_1 = a_1x + b_1y$; $c_2 = a_2x + b_2z$.

An AP has a specific position in space: $AP1(x_1, y_1, z_1)$, $AP2(x_2, y_2, z_2)$, $AP3 (x_3, y_3, z_3)$ . According to the measurement results, an equation set may be established:

$$a_1(x - x_1) + b_1(y - y_1) = 0 \qquad (1)$$

$$a_2(x - x_1) + b_2(z - z_1) = 0 \qquad (2)$$

$$a_3(x - x_2) + b_3(y - y_2) = 0 \qquad (3)$$

$$a_4(x - x_2) + b_4(z - z_2) = 0 \qquad (4)$$

$$a_5(x - x_3) + b_5(y - y_3) = 0 \qquad (5)$$

$$a_6(x - x_3) + b_6(z - z_3) = 0 \qquad (6)$$

A set of solutions of x and y is obtained by solving the equations (1) and (3); another set of solutions of x and y is obtained by solving the equations (3) and (5); a set of solutions of $x$ and $z$ is obtained by solving the equations (2) and (4); another set of solutions of $x$ and $z$ is obtained by solving the equations (4) and (6).

A mean value of these solutions of x should correspond to the solution of x with the smallest error, and this solution of x is substituted back into the equation set to obtain a plurality of solutions of y and z. Similarly, the mean values of these solutions of y and z correspond to the solutions of y and z with the smallest errors, respectively. The final mean values of x, y, and z may not satisfy each equation, but is the solutions with the smallest errors.

Regarding how to establish the above linear equation set through the measurement by the base station, an AOA measurement by the base station is described below.

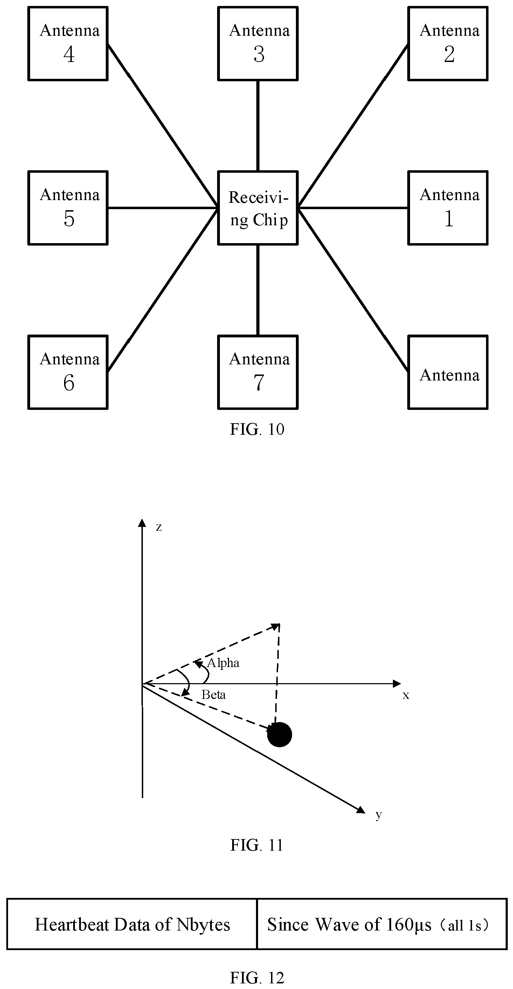

The base station is introduced with an antenna array required for an AOA measurement, and introduced with a separate 2.4 GHz radio frequency chip for the AOA measurement (i.e., an angle of arrival (AOA) calculation module). The design rules of the antenna array should comply with the requirements of the AOA algorithm. In principle, the transmission paths between the antennas of the antenna array and the main chip are completely the same, and the spatial distances between the antennas are exactly equal. Examples of the antenna array are illustrated in FIGS. 9 and 10. The antenna array is configured as a circular or square structure, which is formed by a plurality of symmetrically arranged antennas. It should be determined that the spacing between adjacent antennas in the array is half the wavelength of the 2.4 GHz RF signal

The base station controls an AOA measurement chip to receive a heartbeat signal (i.e., an angle-measurable signal) of the electronic shelf label and output an angle result. At the same time, the base station may also control a communication module to be in communication with the electronic shelf label, and the AOA measurement chip conducts a signal measurement.

As illustrated in FIG. 11, AOA test results may be an angle alpha of an xy plane and an angle beta of an xz plane. A slope of a straight line in the xy plane is obtained correspondingly according to alpha, and a slope of a straight line in the xz plane is obtained correspondingly according to beta, which may be used to establish the aforementioned equations. The results of a plurality of APs can be used to establish the corresponding equation set. Taking AP1 as an example:

$$\tan \alpha_1 = a_1/b_1;$$

$$\tan \beta_1 = a_2/b_2;$$

$$(y - y_1) = \tan\alpha_1 * (x - x_1);$$

$$(z - z_1) = \tan\beta_1 * \sqrt[2]{(x - x_1)^2 + (y - y_1)^2}.$$

On this basis, it can be deduced that, a complete equation set can be established according to the AOA angle test results, and a solution with the smallest error can be obtained.

$$(y - y_1) = \tan\alpha_1 * (x - x_1);$$

$$(z - z_1) = \tan\beta_1 * \sqrt[2]{(x - x_1)^2 + (y - y_1)^2};$$

$$(y - y_2) = \tan\alpha_2 * (x - x_2);$$

$$(z - z_2) = \tan\beta_2 * \sqrt[2]{(x - x_2)^2 + (y - y_2)^2};$$

$$(y - y_3) = \tan\alpha_3 * (x - x_3);$$

$$(z - z_3) = \tan\beta_3 * \sqrt[2]{(x - x_3)^2 + (y - y_3)^2}.$$

If the base station is installed on a ceiling, antenna 1 should be aligned precisely in a direction, such as the due north (all the antennas may also be oriented towards the due east, and here just as an example), and the front of the base station should be kept parallel to the ground. If the base station is installed on a wall, antenna 1 should be precisely oriented in a direction, such as being perpendicular to the ground (all the antennas may also be tilted at a same angle, provided all antennas maintain a uniform configuration). The location server should be notified of whether the attitude of the base station is parallel to the ground or not. According to the attitude of the base station, the location server establishes a coordinate system, constructs an equation set, and then makes a solution.

Finally, the electronic shelf label is assigned to the closest shelf on the map according to the positioning result.

The precise positions of the electronic shelf labels can be obtained, and theses electronic shelf labels are located in an upper area of the shelf within a direct vision range from the base station.

Other electronic shelf labels located in lower areas of the shelf only have a signal relationship of multiple reflections or refractions with the base station, so it is difficult to obtain precise positioning results by means of angle measurement. These electronic shelf labels may be further positioned according to the neighbor relationship (using the positioning method through the neighbor relationship in the prior art).

In the embodiments of the present disclosure, the AOA requires a sine wave signal with a time length, which may follow the heartbeat signal of the electronic shelf label, as illustrated in FIG. 12. It is also possible for the base station to call the roll of the electronic shelf label separately, and the response signal of the electronic shelf label gives a signal with such characteristics.

The heartbeat signal is continuously received by all the base stations. As previously mentioned, since the electronic shelf label reports the heartbeat signal regularly, the base station continuously receives the heartbeat signal of the electronic shelf label. The base station has a separate positioning chip to process this signal. Therefore, there is no need to introduce a system-level procedure for positioning. After calculating the angle of a certain electronic shelf label, the positioning chip of the base station sends the data of the angle to the location server. The location server establishes an equation set and then it is only necessary to make a solution.

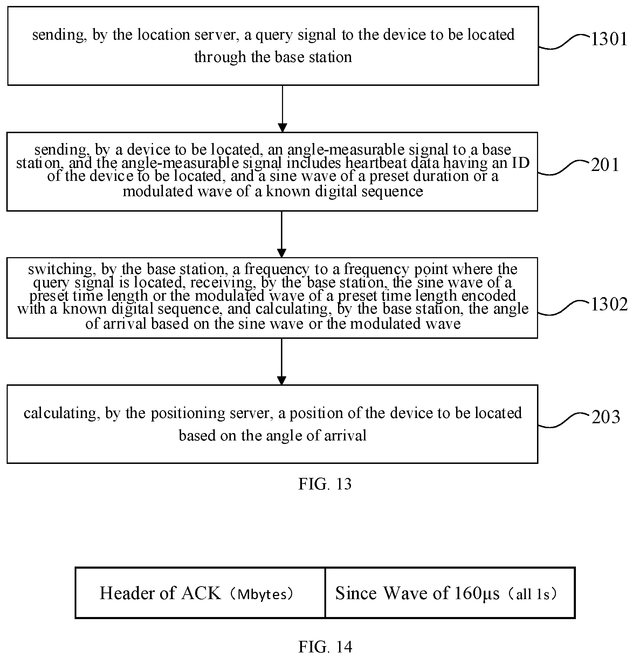

Specifically, as illustrated in FIG. 13, before the sending, by the device to be located, the angle-measurable signal to the base station, the method may further include:

> step 1301: sending, by the location server, a query signal to the device to be located through the base station;
> the step of the calculating, by the base station, the angle of arrival based on the angle-measurable signal includes:
> step 1302: switching, by the base station, a frequency to a frequency point where the query signal is located, receiving, by the base station, the sine wave of a preset duration or the modulated wave of a known digital sequence, and calculating, by the base station, the angle of arrival based on the sine wave or the modulated wave.

Specifically, the location server may initiate a query about an electronic shelf label that has not received a heartbeat signal for a long time. The electronic shelf label replies with a special ACK on a query channel, which satisfies the format illustrated in FIG. 14. Next, each of the base stations may separately conduct a query and a signal measurement on the electronic shelf label. The measurement results are sent to the location server, which calculates a positioning result. A base station communication sub-board is responsible for querying the electronic shelf label and receiving the ACK. Meanwhile, under the signal control of a main board, a positioning sub-board switches the frequency to a specified query frequency point, receives the sine wave or the modulated wave and determine the angle.

For the signals from a plurality of base stations, there is a difference in the time of query. However, the query may be applicable for the positioning of the electronic shelf labels that are stationary most of the time.

In the embodiments of the present disclosure, the heartbeat signal of the electronic shelf label may be added with a sine wave signal at a tail. The cart or any other device moving in the store may be added with an emitting circuit similar to the electronic shelf label. The actual position of the cart in the store can be determined according to the directional angle of the heartbeat signal of the electronic shelf label received by the AP.

The cart periodically sends the AOA signal that can be received by the AP, and the AP positions the cart. Since the position of the cart is low, the signal arriving at the AP is also the result of the superposition of multipath signals, and it is expected that there will be a large error.

Similarly, if Bluetooth is turned on by an APP in a mobile phone of a person walking in the store, the person may be located using the AOA of the AP, and it is expected that there will be a large error.

In an embodiment, the step of the calculating, by the location server, the position of the device to be located based on the angle of arrival includes:

> receiving, by the location server, the angle of arrival of the same device to be located measured by one or more of the base stations within a predefined time window; and
> calculating, by the location server, the position of the device to be located according to the angle of arrival measured by one or more of the base stations.

That is, the embodiments of the present disclosure can support a plurality of base stations to measure the angle of arrival of the same device to be located, so as to calculate the position of the device to be located and achieve the purpose of precise measurement.

The embodiments of the present disclosure further provide a computer device, including a memory, a processor, and a computer program stored in the memory and executable on the processor, and when executing the computer program, the processor implements the device positioning method by using signal direction.

The embodiments of the present disclosure further provide a computer-readable storage medium which stores a computer program, and when executed by a processor, the computer program implements the device positioning method by using signal direction.

The embodiments of the present disclosure further provide a computer program product, which includes a computer program, and when executed by a processor, the computer program implements the device positioning method by using signal direction.

As compared with a technical solution in the prior art that a neighbor relationship between electronic shelf labels being obtained through mutual communication and measurement therebetween is used to the electronic shelf label positioning, or the real-time human positioning is realized by introducing the Ibeacon, in the embodiments of the present disclosure, a device to be located sends an angle-measurable signal to a base station, and the angle-measurable signal includes heartbeat data, and a sine wave of a preset duration; the base station calculates an angle of arrival based on the angle-measurable signal, and sends the angle of arrival to the location server, and the base station includes an angle of arrival (AOA) calculation module and an antenna array required for an AOA measurement; and the location server calculates a position of the device to be located based on the angle of arrival, thereby improving the positioning accuracy of an electronic shelf label and reducing the complexity of the deployment of an electronic shelf label positioning system. In this positioning solution, the electronic shelf label within a direct vision range of the AOA module can obtain highly reliable positioning results, but those within a non-direct vision range cannot obtain highly reliable positioning results. These non-direct vision electronic shelf labels can further obtain more accurate positioning results through a neighbor relationship with electronic shelf labels with the highly reliable positioning results and a neighbor learning method.

Those skilled in the art should appreciate that any embodiment of the present disclosure can be provided as a method, a system or a computer program product. Therefore, the present disclosure can take the form of a full hardware embodiment, a full software embodiment, or an embodiment combining software and hardware. Moreover, the present disclosure can take the form of a computer program product implemented on one or more computer usable storage mediums (including, but not limited to, a magnetic disc memory, CD-ROM, optical storage, etc.) containing therein computer usable program codes.

The present disclosure is described with reference to a flowchart and/or a block diagram of the method, apparatus (system) and computer program product according to the embodiments of the present disclosure. It shall be appreciated that each flow and/or block in the flowchart and/or the block diagram and a combination of flows and/or blocks in the flowchart and/or the block diagram can be realized by computer program instructions. Those computer program instructions can be provided to a general computer, a dedicated computer, an embedded processor or a processor of other programmable data processing device to produce a machine, so that the instructions executed by the processor of the computer or other programmable data processing device produce means for realizing specified functions in one or more flows in the flowchart and/or one or more blocks in the block diagram.

These computer program instructions may also be stored in a computer readable memory capable of guiding the computer or other programmable data processing devices to work in a particular manner, so that the instructions stored in the computer readable memory can produce manufacture articles including an instructing device which realizes function(s) specified in one or more flows in the flowchart and/or one or more blocks in the block diagram.

These computer program instructions may also be loaded onto the computer or other programmable data processing devices, so that a series of operation steps are performed on the computer or other programmable data processing devices to produce a processing realized by the computer, thus the instructions executed on the computer or other programmable devices provide step(s) for realizing function(s) specified in one or more flows in the flowchart and/or one or more blocks in the block diagram.

The specific embodiments further make detailed illustrations to the objectives, technical solutions and advantageous effects of the present disclosure. It should be understood that those described above are only specific embodiments of the present disclosure and are not intended to limit the protection scope of the present disclosure. Any modification, equivalent substitution or improvement made within the spirit and principle of the present disclosure should fall within the protection scope of the present disclosure.

**Claims**

1. A device positioning method by using signal direction, comprising:

   sending, by a device to be located, an angle-measurable signal to a base station, wherein the angle-measurable signal comprises heartbeat data having an ID of the device to be located, and a sine wave of a preset duration or a modulated wave of a known digital sequence;
   calculating, by the base station, an angle of arrival based on the angle-measurable signal, and sending the angle of arrival to a location server, wherein the base station comprises an angle of arrival (AOA) calculation module and an antenna array required for an AOA measurement; and

calculating, by the location server, a position of the device to be located based on the angle of arrival.

2. The device positioning method by using signal direction according to claim 1, wherein the base station comprises a radio frequency circuit required for service data communication with the electronic shelf label, and an antenna array required for angle-based positioning;

wherein the method further comprises:
performing, by the base station, service communication with the device to be located through the radio frequency circuit, and receiving, by the base station, the heartbeat data, and the sine wave or the modulated wave, of the device to be located within a coverage range.

3. The device positioning method by using signal direction according to claim 1, further comprising:

emitting, by an anchor, an angle-measurable signal, and the angle-measurable signal is transmitted to the location server through the base station; wherein a position of the anchor is fixed and known;

calibrating, by the location server, an attitude of the antenna array of the base station based on an angle of arrival of the anchor with the known position; and

determining, by the location server based on the angle-measurable signal and through a neighbor positioning method, the position of the device to be located, which has a neighbor relationship with the anchor.

4. The device positioning method by using signal direction according to claim 1, wherein the antenna array required for the AOA measurement is configured as a circular or square structure, which is formed by a plurality of symmetrically arranged antennas.

5. The device positioning method by using signal direction according to claim 1, wherein a spacing between adjacent antennas in the antenna array required for the AOA measurement is half of a wavelength of a 2.4 GHz radio frequency signal.

6. The device positioning method by using signal direction according to claim 1, wherein before the sending, by the device to be located, the angle-measurable signal to the base station, the method further comprises:

sending, by the location server, a query signal to the device to be located through the base station;

wherein the calculating, by the base station, the angle of arrival based on the angle-measurable signal comprises:

switching, by the base station, a frequency to a frequency point where the query signal is located, receiving, by the base station, the sine wave of a preset duration or the modulated wave of the known digital sequence, and calculating, by the base station, the angle of arrival based on the sine wave or the modulated wave.

7. The device positioning method by using signal direction according to claim 1, wherein the calculating, by the location server, the position of the device to be located based on the angle of arrival comprises:

establishing a coordinate system according to the location server and an attitude of the base station;

constructing a position equation set based on the angle of arrival and the coordinate system; and

obtaining the position of the device to be located by solving the position equation set.

8. The device positioning method by using signal direction according to claim 1, wherein the calculating, by the location server, the position of the device to be located based on the angle of arrival comprises:

receiving, by the location server, the angle of arrival of the same device to be located measured by one or more of the base stations within a predefined time window; and

calculating, by the location server, the position of the device to be located according to the angle of arrival measured by one or more of the base stations.

9. A device positioning system by using signal direction, comprising a device to be located, a base station, and a location server;

the device to be located, the base station, and the location server are configured to implement the device positioning method by using signal direction according to any one of claims 1 to 8.

10. The device positioning system by using signal direction according to claim 9, further comprising a map server configured to display, in a map, the position of the device to be located.

11. The device positioning system by using signal direction according to claim 9, further comprising an anchor configured to emit an angle-measurable signal to the base station; wherein a position of the anchor is fixed and known;
the base station is configured to determine, based on the angle-measurable signal and through a neighbor positioning method, the position of the device to be located, which has a neighbor relationship with the anchor.

12. A computer device, comprising a memory, a processor, and a computer program stored in the memory and executable on the processor, wherein when executing the computer program, the processor implements the device positioning method by using signal direction according to any one of claims 1 to 8.

13. A computer-readable storage medium, storing a computer program, wherein when executed by a processor, the computer program implements the device positioning method according to any one of claims 1 to 8.

14. A computer program product, comprising a computer program, wherein when executed by a processor, the computer program implements the device positioning method according to any one of claims 1 to 8.

```
                                    ┌─────────────┐
                                    │  Map Server │
                                    └─────────────┘
                                           ↕
              ┌─────────┐              ┌─────────────────┐
        ┌────→│  ESLW   │←──────────→  │ Location Server │
        │     └─────────┘              └─────────────────┘
        │          ↕                          ↕
        │     ┌─────────┐
        │     └─────────┘
   ┌────┴───┐   ┌────────┐            ┌────────┐
   │ AP comm│   │ AP comm│            │  2.4G  │
   ├────────┤   ├────────┤            │  AOA   │
   │  2.4G  │   │  2.4G  │            └────────┘
   │  AOA   │   │  AOA   │
   └────────┘   └────────┘

   ┌────────┐   ┌────────┐            ┌────────┐
   │ Anchor │   │ Anchor │            │ Anchor │
   ├────────┤   ├────────┤            ├────────┤
   │  2.4G  │   │  2.4G  │            │  2.4G  │
   └────────┘   └────────┘            └────────┘

   ┌───────────┐ ┌───────────┐        ┌───────────┐
   │ESL (2.4G) │ │ESL (2.4G) │        │ESL (2.4G) │
   │ ┌─────────┴┐│ ┌─────────┴┐│       │ ┌─────────┴┐
   │ │ESL (2.4G)││ │ESL (2.4G)││       │ │ESL (2.4G)│
   └─┤ ┌────────┴┤─┤ ┌────────┴┤─     └─┤ ┌────────┴┤
     │ │ESL (2.4G)│ │ │ESL (2.4G)│       │ │ESL (2.4G)│
     └─┤        │  └─┤         │        └─┤         │
       └────────┘    └─────────┘          └─────────┘
```

FIG. 1

```
┌─────────────────────────────────────────────────────────────────┐
│   sending, by a device to be located, an angle-measurable         │
│   signal to a base station, and the angle-measurable signal       │         201
│   includes heartbeat data having an ID of the device to be        │──────⌐
│   located, and a sine wave of a preset duration or a              │
│   modulated wave of a known digital sequence                      │
└─────────────────────────────────────────────────────────────────┘
                              │
                              ↓
┌─────────────────────────────────────────────────────────────────┐
│   calculating, by the base station, an angle of arrival based     │
│   on the angle-measurable signal, and sending the angle of        │
│   arrival to a location server, and the base station includes     │──────⌐  202
│   an angle of arrival (AOA) calculation module and an             │
│   antenna array required for an AOA measurement                   │
└─────────────────────────────────────────────────────────────────┘
                              │
                              ↓
┌─────────────────────────────────────────────────────────────────┐
│   calculating, by the positioning server, a position of the       │
│   device to be located                                            │──────⌐  203
│   based on the angle of arrival                                    │
└─────────────────────────────────────────────────────────────────┘
```

FIG. 2

AP1

| Shelf1-1 | Shelf1-2 | Shelf1-3 | Shelf1-4 | Shelf1-5 | Shelf1-6 | Shelf1-7 | Shelf1-8 |
|---|---|---|---|---|---|---|---|
| Shelf2-1 | Shelf2-2 | Shelf2-3 | Shelf2-4 | Shelf2-5 | Shelf2-6 | Shelf2-7 | Shelf2-8 |

AP2

| Shelf3-1 | Shelf3-2 | Shelf3-3 | Shelf3-4 | Shelf3-5 | Shelf3-6 | Shelf3-7 | Shelf3-8 |
|---|---|---|---|---|---|---|---|
| Shelf4-1 | Shelf4-2 | Shelf4-3 | Shelf4-4 | Shelf4-5 | Shelf4-6 | Shelf4-7 | Shelf4-8 |

AP-AOA1

AP-AOA2

| Shelf5-1 | Shelf5-2 | Shelf5-3 | Shelf5-4 | Shelf5-5 | Shelf5-6 | Shelf5-7 | Shelf5-8 |
|---|---|---|---|---|---|---|---|
| Shelf6-1 | Shelf6-2 | Shelf6-3 | Shelf6-4 | Shelf6-5 | Shelf6-6 | Shelf6-7 | Shelf6-8 |

| Shelf7-1 | Shelf7-2 | Shelf7-3 | Shelf7-4 | Shelf7-5 | Shelf7-6 | Shelf7-7 | Shelf7-8 |
|---|---|---|---|---|---|---|---|
| Shelf8-1 | Shelf8-2 | Shelf8-3 | Shelf8-4 | Shelf8-5 | Shelf8-6 | Shelf8-7 | Shelf8-8 |

AP3

AP4

FIG. 3

```
┌─────────────────┐                              ┌─────────────────┐
│ Radio Frequency │                              │  Antenna Array  │
│ Board Circuit for│ ◄──────────┐                │  Required for   │
│    Service      │            │                │      AOA        │
│  Communication  │            │          ┌────►│  Measurement    │
│       1         │            │          │      └─────────────────┘
└─────────────────┘            │          │
                               ▼          │
         │              ┌─────────────┐   │
         │              │ Main Control│───┘
         │              │Chip of Base │
         │              │   Station   │◄─────────┐
         │              └─────────────┘          │
┌─────────────────┐            ▲          │      ┌─────────────────┐
│ Radio Frequency │            │          │      │ Angle of Arrival│
│ Board Circuit for│ ◄──────────┘          └────►│     (AOA)       │
│    Service      │                              │  Calculation    │
│  Communication  │                              │    Module       │
│       N         │                              └─────────────────┘
└─────────────────┘
```

FIG. 4

┌──────────────────────────────────────────────────────────────┐
│ sending, by a device to be located, an angle-measurable signal to a base          │
│ station, and the angle-measurable signal includes heartbeat data having an ID     │  ⟋‾201
│ of the device to be located, and a sine wave of a preset duration or a            │
│ modulated wave of a known digital sequence                                        │
└──────────────────────────────────────────────────────────────┘

┌──────────────────────────────────────────────────────────────┐
│ calculating, by the base station, an angle of arrival based on the angle-         │
│ measurable signal, and sending the angle of arrival to a location server, and     │  ⟋‾202
│ the base station includes an angle of arrival (AOA) calculation module and an     │
│ antenna array required for an AOA measurement                                     │
└──────────────────────────────────────────────────────────────┘

┌──────────────────────────────────────────────────────────────┐
│ calculating, by the positioning server, a position of the device to be located   │  ⟋‾203
│ based on the angle of arrival                                                     │
└──────────────────────────────────────────────────────────────┘

┌──────────────────────────────────────────────────────────────┐
│ sending the position of the device to be located to a map server, and            │
│ displaying, in a map, the position of the device to be located through the map    │  ⟋‾501
│ server                                                                            │
└──────────────────────────────────────────────────────────────┘

FIG. 5

emitting, by an anchor, an angle-measurable signal, and the angle-measurable signal is transmitted to the location server through the base station; and a position of the anchor is fixed and known

~601

calibrating, by the location server, an attitude of the antenna array of the base station based on an angle of arrival of the anchor with the known position

~602

determining, by the location server based on the angle-measurable signal and through a neighbor positioning method, the position of the device to be located, which has a neighbor relationship with the anchor

~603

FIG. 6

establishing a coordinate system according to the location server and an attitude of the base station

~701

constructing a position equation set based on the angle of arrival and the coordinate system

~702

obtaining the position of the device to be located by solving the position equation set

~703

FIG. 7

FIG. 8

FIG. 9

FIG. 10

FIG. 11

| Heartbeat Data of Nbytes | Since Wave of 160µs (all 1s) |
|---|---|

FIG. 12

sending, by the location server, a query signal to the device to be located through the base station ⟶1301

sending, by a device to be located, an angle-measurable signal to a base station, and the angle-measurable signal includes heartbeat data having an ID of the device to be located, and a sine wave of a preset duration or a modulated wave of a known digital sequence ⟶201

switching, by the base station, a frequency to a frequency point where the query signal is located, receiving, by the base station, the sine wave of a preset time length or the modulated wave of a preset time length encoded with a known digital sequence, and calculating, by the base station, the angle of arrival based on the sine wave or the modulated wave ⟶1302

calculating, by the positioning server, a position of the device to be located based on the angle of arrival ⟶203

FIG. 13

| Header of ACK（Mbytes) | Since Wave of 160μs（all 1s) |
|---|---|

FIG. 14

## INTERNATIONAL SEARCH REPORT

| International application No. |
| --- |
| **PCT/CN2022/129394** |

### A. CLASSIFICATION OF SUBJECT MATTER

G06K7/00(2006.01)i

According to International Patent Classification (IPC) or to both national classification and IPC

### B. FIELDS SEARCHED

Minimum documentation searched (classification system followed by classification symbols)

IPC: G06K

Documentation searched other than minimum documentation to the extent that such documents are included in the fields searched

Electronic data base consulted during the international search (name of data base and, where practicable, search terms used)

CNTXT, ENTXTC, CNKI: 方向, 定位, 心跳, 身份, 正弦, 调制, 到达角, 服务器, 中心, 天线阵, direction, location, heartbeat, Identity, ID, sine, modulation, angle of arrival, AoA, server, center, antenna, array

### C. DOCUMENTS CONSIDERED TO BE RELEVANT

| Category* | Citation of document, with indication, where appropriate, of the relevant passages | Relevant to claim No. |
| --- | --- | --- |
| X | WO 2011035256 A2 (CHECKPOINT SYSTEMS, INC.) 24 March 2011 (2011-03-24) description, paragraphs [00158] and [00215]-[00334] | 1-14 |
| A | CN 108924925 A (SHANGHAI HIGHWAY BRIDGE (GROUP) CO., LTD.) 30 November 2018 (2018-11-30) entire document | 1-14 |
| A | CN 109874134 A (CHONGQING GUGENG TECHNOLOGY CO., LTD.) 11 June 2019 (2019-06-11) entire document | 1-14 |
| A | US 2017195855 A1 (SAMSUNG ELECTRONICS CO., LTD.) 06 July 2017 (2017-07-06) entire document | 1-14 |
| A | US 2021242951 A1 (TRAKPOINT SOLUTIONS, INC.) 05 August 2021 (2021-08-05) entire document | 1-14 |
| A | US 2022022056 A1 (QUALCOMM INC.) 20 January 2022 (2022-01-20) entire document | 1-14 |

☑ Further documents are listed in the continuation of Box C.   ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **12 July 2023** | **18 July 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2022/129394** |

### C. DOCUMENTS CONSIDERED TO BE RELEVANT

| Category* | Citation of document, with indication, where appropriate, of the relevant passages | Relevant to claim No. |
| --- | --- | --- |
| A | WO 2016118776 A1 (CLOUDLEAF, INC.) 28 July 2016 (2016-07-28)<br>entire document | 1-14 |

Form PCT/ISA/210 (second sheet) (July 2022)

## INTERNATIONAL SEARCH REPORT
### Information on patent family members

| | International application No. |
|---|---|
| | **PCT/CN2022/129394** |

| Patent document cited in search report | | | Publication date (day/month/year) | Patent family member(s) | | | Publication date (day/month/year) |
|---|---|---|---|---|---|---|---|
| WO | 2011035256 | A2 | 24 March 2011 | None | | | |
| CN | 108924925 | A | 30 November 2018 | None | | | |
| CN | 109874134 | A | 11 June 2019 | None | | | |
| US | 2017195855 | A1 | 06 July 2017 | US | 10149107 | B2 | 04 December 2018 |
| | | | | KR | 20170082006 | A | 13 July 2017 |
| | | | | KR | 102356954 | B1 | 28 January 2022 |
| | | | | WO | 2017119580 | A1 | 13 July 2017 |
| US | 2021242951 | A1 | 05 August 2021 | WO | 2021154983 | A1 | 05 August 2021 |
| US | 2022022056 | A1 | 20 January 2022 | KR | 20230035322 | A | 13 March 2023 |
| | | | | EP | 4182725 | A1 | 24 May 2023 |
| | | | | WO | 2022015774 | A1 | 20 January 2022 |
| WO | 2016118776 | A1 | 28 July 2016 | CA | 2974518 | C | 16 August 2022 |
| | | | | EP | 3248401 | A1 | 29 November 2017 |
| | | | | HK | 1247022 | A1 | 14 September 2018 |

Form PCT/ISA/210 (patent family annex) (July 2022)